# EUROPEAN PATENT SPECIFICATION

(11) **EP 3 393 265 B1**
(45) Date of publication and mention of the grant of the patent: **13.03.2019**
(21) Application number: 16797860.0
(22) Date of filing: 16.11.2016
(51) Int. Cl.: A23D 7/00, A23D 7/015, A23D 7/02, A23D 7/01

(54) **PROCESS FOR PREPARING A FAT SLURRY COMPRISING OLIVE OIL AND FOR PREPARING A SPREAD WITH SAID SLURRY**
VERFAHREN ZUR HERSTELLUNG EINER FETTSCHLÄMME MIT OLIVENÖL UND ZUR HERSTELLUNG EINES BROTAUFSTRICHS MIT BESAGTER SCHLÄMME
PROCÉDÉ DE PRÉPARATION D'UNE SUSPENSION DE MATIÈRE GRASSE COMPRENANT DE L'HUILE D'OLIVE ET DE PRÉPARATION D'UN PRODUIT À TARTINER AVEC LADITE SUSPENSION

(30) Priority: 21.12.2015 EP 15201653
(43) Date of publication of application: 31.10.2018
(73) Proprietor: Unilever NV, 3013 AL Rotterdam (NL); Unilever PLC, London, Greater London EC4Y 0DY (GB); Upfield Europe B.V., 3071 JL Rotterdam (NL); Unilever BCS Limited, London, EC4Y 0DY (GB)
(72) Inventor: GREBENKÄMPER, Kai, 3133 AT Vlaardingen (NL); ABRAHAM, Leenhouts, 3133 AT Vlaardingen (NL); THE, Rogier, Antoine, Floris, 3133 AT Vlaardingen (NL)
(74) Representative: EP&C
(86) International application number: PCT/EP2016/077801
(87) International publication number: WO 2017/108275

(56) References cited:
- EP-A1- 1 651 338
- EP-A1- 2 191 730
- WO-A1-2014/158105
- US-A- 5 989 618
- US-A1- 2015 320 068

## Description

### Field of the Invention

The present invention relates to a process for preparing a slurry of an edible oil phase and fat powder, which edible oil phase comprises olive oil, and to a process of preparing an edible fat-continuous spread out of such.

### Background of the invention

Fat continuous food products are well known in the art and include for example shortenings comprising a fat phase and water in oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. For a margarine or spread, ideally the structuring fat has such properties that it melts or dissolves at mouth temperature. Otherwise the product may have a heavy and/or waxy mouthfeel.

Important aspects of a fat continuous spread like for example margarine and low fat spread, the low fat spread usually comprising up to 45 wt% fat on total composition, are for example hardness, spreadability and ability to withstand temperature cycling. Temperature cycling means that the product is subjected to low and high temperatures (e.g. when the consumer takes the product out of the refrigerator and leaves it for some time at the table prior to use). This may have a negative influence on the structure of the spread (like for example destabilization of the emulsion or oil-exudation).

Generally edible fat continuous food products like shortenings and margarines and similar edible fat continuous spreads are prepared according to prior art processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

A disadvantage of these processes is that the complete composition (including the liquid oil, structuring fat and if present the aqueous phase) is subjected to a heating step and a cooling step. This requires a lot of energy. For a spread comprising for example 6 wt% structuring fat the whole composition (100 wt%) has to be heated and cooled.

Another disadvantage of the known processes is that the choice of fats that can practically be used as structuring agent is rather limited. If the melting point of the structuring agent is too high the melting properties in the mouth are unsatisfactory. If on the other hand, the melting point is too low, the emulsion stability will be negatively affected. Moreover the amount of saturated fatty acids (SAFA) in the structuring agent is usually relatively high. Also trans-unsaturated fatty acid may be present. Some experts have called for reductions in these fatty acids to improve cardiovascular health.

Some consumers prefer spreads that have a low energy density (for example products that are low in total fat) and/or are low in SAFA but still have a good nutritional profile (by providing for example essential fatty acids like omega-3 and omega-6).

A further disadvantage of the known processes is that the product or ingredients may deteriorate due to the changes in temperature caused by the heating and cooling step.

Alternative processes have been described wherein the structuring fat is added as fat powder (i.e. crystallized fat) thereby eliminating the need to heat the whole composition to above the melting temperature of the structuring fat.

US 5989618 relates to a fat continuous spread having less than 50% fat and containing less than 10% trans fatty acids, which is prepared by a process comprising the steps of selecting a structuring amount of interesterfied hardstock and combining the hardstock with the liquid oil to form a fat phase. The fat phase and an aqueous phase containing a gelling agent are introduced into a scraped surface heat exchanger to form a cooled emulsion having an exit temperature of less than the temperature required to form a substantial amount of alpha crystals in the fat phase. EP 1651338 discloses a process for the preparation of a spreadable edible dispersion wherein a mixture of oil and solid structuring agent particles is subjected to stirring and an aqueous phase is gradually added to the mixture until a dispersion is obtained. The solid structuring agent particles disclosed in this reference have a microporous structure of submicron size particles and can be prepared using a micronisation process. The solid structuring agent particles (i.e. can be seen as fat powder) in such process need to be mixed with oil, and upon applying some shear a slurry will be obtained of fat particles (composed of structuring fat) dispersed in the oil. Such slurry in turn can be mixed with an aqueous phase to form a water in oil dispersion, such as spreads and margarines.
The oils preferably used for making such spreads and margarines, and consequently for the oil and fat slurries used to make them according to a process similar to that disclosed in EP 1651338, are preferably predominantly vegetable oils, e.g. for health reasons. Typical oils in this connection are sunflower oil, rape seed oil, and bean oil, for reasons of availability, price and composition.
The fat powders used in processes like EP 1651338 are made of structuring fat. Structuring fat is edible fat, predominantly of fatty acid triglyceride ester composition, which has a melting point such that it is predominantly solid at e.g. 5°C and that it is for a large proportion liquid at 37°C. Such structuring fats preferably have a solid fat content N10 from 50 to 100, N20 from 26 to 95, and N35 from 5 to 60. This enables it to give structure and stability to the emulsion yet it allows the emulsion to break down in the mouth, thereby providing the desired mouthfeel and other properties. Compositionally, such structuring fats are often harder fractions of natural fats, fully hardened oils, and (interesterified) blends thereof and with vegetable oils.
It was found that in processes for making margarines and spreads using the technique of EP1651338, when olive oil is present in the oils which are to be mixed with the fat powder and the resulting slurries are processed into emulsions like spreads or margarines by blending with an aqueous phase, it may be that either no stable emulsions could be formed or the emulsions are obtained that have larger than desired water droplets and/or have less than desired stability. Olive oil, however, is a desired ingredient in such emulsions, e.g. for reasons of consumer preference.

As olive oil is expensive compared to the more usual bean oil, sunflower oil and rape seed oil, the oil phase in the process as set out is usually a blend containing olive oil. The remainder can be e.g. one of the other three mentioned. The above signaled problem appeared especially to be the case when the oil phase contained substantial portions of bean oil next to olive oil.

### Summary of the Invention

Hence, it is an object of the present invention to be able to manufacture water in oil emulsions like spreads and margarines (incl. liquid), using a process which involves blending a fat powder, in particular a micronized fat powder, with an oil phase, which oil phase comprises olive oil.

It has now been found that the above objectives can be met, at least in part, by a process for preparing an edible fat slurry comprising fat powder and oil, by mixing 2-30% by weight (on the total slurry) of a fat powder of a structuring fat and 70-98% by weight (on the total slurry) of edible oil, wherein said edible oil is provided as at least two separate oil phases:
(a) 50-99% (by weight based on edible oil) of an edible oil phase (a) comprising at least 30% soy bean oil, by weight on edible oil phase (a),
(b) 1-50% (by weight based on edible oil) of an edible oil phase (b) comprising at least 50% (by weight, on total oil phase (b)) of olive oil,
said process comprising the steps of:
- providing the fat powder;
- providing oil phase (a);
- combining the fat powder and oil phase (a) and mixing the fat powder and oil phase (a) in the mixing vessel to a fat slurry for a period of 1 to 30 minutes, during at least part of said mixing the pressure in the vessel is below 0.5 bar;
- providing oil phase (b);
- adding oil phase (b) to the slurry of fat powder and oil phase (a) followed by further mixing for 30 seconds to 10 minutes to provide the final slurry.

### Detailed description of the invention

In other words, it was found that if olive oil is desired as part of the formulation next to other oils, e.g. when making oil-continuous emulsions like spreads and margarines by a method involving blending fat powder and oils to form a slurry, followed by mixing said slurry with an aqueous phase, it was found beneficial to "post-dose" the olive oil to the slurry compared to other oils, in particular soy bean oil. In other words, it was found to be beneficial for emulsion stability and water droplet size to first prepare the slurry of fat powder and soy bean oil and any oil other than olive oil, and then to add the olive oil fraction. This olive oil-containing slurry is thus prepared in two stages, following which it is blending with an aqueous phase

Although in theory all of the oil in the emulsion to be prepared may be olive oil, this is unlikely for reasons of supply and/or cost. Often, if olive oil is desired as a component in the oil phase, it is preferred that the total amount of olive oil in the final slurry is between 1-50% by weight, based on the total slurry, more preferably 3-30% by weight, based on the total slurry, and even more preferably 3-20% by weight, based on the total slurry.

As there needs to be a minimum amount of oil phase (a) to be mixed with the fat powder to prepare the slurry, it is preferred that in the process according to the present invention the amount of edible oil phase (b) mixed with the slurry is 3-30% by weight of the total amount of oil phase, and preferably such is 5-20% by weight of the total amount of oil phase.

As there needs to be oil for oil phase (a) and as post dosing requires additional equipment, the post dosing of oil phase (b) is preferably kept to a minimum in volume. On the other, as mentioned, better emulsions are obtained if olive oil is post dosed to the slurry. Hence, in a preferred embodiment all of the olive oil desired in the formulation is post-dosed. Thus, in the process according to the present invention it is preferred that all of the edible oil phase (b) is olive oil.

Olive oils, being a natural product, differ in their chemical composition, e.g. with respect to the various fatty acids and triglycerides. It was found that the present invention is particularly suitable when wishing to use olive oils which are relatively high in saturated fatty acids, as such olive oils appear to present the most problems in creating stable emulsions when using fat powder and oil to make a slurry which is turned into an emulsion by blending with water under shear. Hence, in the process of the present invention it is preferred that the level of saturated fatty acids in oil phase (b) is at least 15% by weight, based on total oil phase (b), more preferably at least 17%.

When making water in oil emulsions such as spreads with the method of using fat powder and oil to make a slurry which is turned into an emulsion by blending with water under shear as set out herein, one needs as much fat powder as is needed for emulsion stability and for firmness of the resulting product. Still, preferably one uses as little as possible of such fat powder, as it is more costly than oil, and as too much fat powder dispersed in oil may render the slurry to firm to be processed. Hence, in the present invention it is preferred that the edible fat slurry comprising fat powder and oil is prepared by mixing 5-25% by weight (on the total slurry) of a fat powder of a structuring fat and 75-95% by weight (on the total slurry) of edible oil, and more preferably these amounts are 8-22% and 78-92%, respectively.

The fat powder can be made by any suitable process for making fat powder. Suitable methods to prepare the fat powder include for example cryo-crystallization, in which atomized liquid droplets come in contact with liquid nitrogen causing the droplets to instantaneously solidify, and Super Critical Melt Micronisation (ScMM), also known as particles from gas saturated solutions (PGSS). ScMM is a commonly known method and is for example described in J. of Supercritical Fluids 43 (2007) 181-190 and EP1651338. For some applications fat powders prepared by this super critical melt micronisation (micronized fat powders) are preferred, as it is a very effective stabiliser for use in the emulsions as are targeted here is micronized fat powder. Hence, in the process according to the present invention, the fat powder is preferably a micronised fat powder.

The fat powder comprises hardstock fat and preferably comprises at least 80 wt. % of hardstock fat, more preferably at least 85 wt. %, even more preferably at least 90 wt. %, even more preferably at least 95 wt. % and even more preferably at least 98 wt. %. Still even more preferably the edible fat powder essentially consists of hardstock fat. The hardstock fat as present in the edible fat powder preferably has a solid fat content N10 from 50 to 100, N20 from 26 to 95 and N35 from 2 to 60. Preferably the hardstock fat consist of fatty acid triglycerides.

For a process in which microporous fat particles are mixed with oil, following which microporous particles are broken down into smaller particles, the viscosity of the oil/particle slurry will increase. For these fat slurries, the viscosity increase is desired as it shows good structuring potential, and a minimum viscosity can be the target. Higher viscosity relates to more intense mixing, and following this, in the present invention, it is preferred that the viscosity of the mixture of oil phase (a) and fat powder, prior to adding oil phase (b) to said mixture is at least 5 dPa.s, preferably at least 8 dPa.s, more preferably at least 10 dPa.s.

When powders such as fat powders, especially fat powders with a very low bulk density (examples of such are micronized fat powders) are to be mixed with oil, preferably at concentrations of 1-25 weight % powder on oil, more preferably at 2-20%, this is preferably achieved at a reduced pressure. A reduced pressure makes that wetting is quicker and also any potential remainder of the gas used in production of the fat particles (entrapped in the small cavities) that could prevent complete mixing with oil is thus removed.

As mentioned, mixing is to be carried out of the fat powder and the oil. This may be carried out by any suitable means. Preferably, the oil and the fat powder are mixed by one or more of (a) recirculation means, (b) a dynamic mixer, and (c) a stirrer in the mixing vessel. When the mixing vessel contains a recirculation means as part of the mixing equipment, such will usually contain a pump, but it may also be preferred that the recirculation means (recirculation loop or tube) comprises mixing means, preferably an in-line mixer, preferably a dynamic in-line mixer.

It will be clear that the fat powder is mixed with the oil to achieve that a slurry is obtained. This slurry can only exist if the temperature of the mixture oil + fat powder is kept below the melting point of the fat powder. In most cases fat powders will be used that melt at in the mouth conditions. Therefore preferably the temperature of the fat powder, oil phase, and mixture thereof is kept at a temperature of below 35°C, more preferably below 30°C.

The process to make the slurries prepared according to the present invention is primarily designed to deliver slurries of fat powder (comprising structuring fat) and oil that can be mixed with a water phase to give a stabilised water-in-oil emulsion, such as e.g. spreads. The basics of such process are set out in EP1651338. Typically, such spreads comprise 20-70% fat and 30-80% of an aqueous phase. Thus, apart from making such slurries, the present invention further relates to a process for making an edible oil-continuous emulsion containing 20-70% (by weight on the total emulsion) of a fat phase and 30-80% (by weight on the total emulsion) of an aqueous phase, which process comprises the steps of:
- providing the aqueous phase at a temperature below 35°C,
- providing a fat slurry of an oil phase and fat powder,
- mixing said aqueous phase and said fat slurry to obtain an oil-continuous emulsion,
wherein said fat slurry is obtained by the process as set out herein and above.

The water in oil emulsions so prepared are preferably free of monoglyceride emulsifier, as these components have an artificial image. Thus, in the process as set out above, it is preferred that the emulsion does not contain a fatty acid monoglyceride emulsifier. An emulsifier that is beneficial or even required is lecithin. Hence, in the processes as set out above, wherein the emulsion preferably comprises 0.05-0.5% of lecithin, based on the total emulsion.

As mentioned above, emulsions according to this invention preferably do not contain monoglyceride. When omitting monoglycerides, it is also preferred that the emulsion produced by the process does not contain protein (e.g. milk protein like whey and buttermilk powder). Hence, in the process according to the present invention, it is preferred that the emulsion does not contain protein.

Both the process for making the slurry as well as the process to make an water in oil emulsion out of such is preferably carried out as a batch process.

### EXAMPLES

### Water droplet size distribution of W/O emulsions

The normal terminology for Nuclear Magnetic Resonance (NMR) is used throughout this method. On the basis of this method the parameters d_{3,3} and exp(σ) of a lognormal water droplet size distribution can be determined. The d_{3,3} is the volume weighted mean droplet diameter and σ (e-sigma) is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the lognormal droplet size distribution - the parameters of the water droplet size distribution d_{3,3} (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

### Stability of the spread

Stability of the produced spreads was measured by the spreading test score. The spreading test is as follows:
- a sample is stored for a minimum of 24 h at 5 °C;
- the sample from the cooling cabinet;
- spreading approximately 30 g of sample with the pallet knife 6 times back- and forwards, whereby the thickness of the layer of spread should be reduced to about 2 to 3 mm;
- scoring the appearance of the spread against the photographic scale: a score 1 is good, score 5 is very poor, crumbly, broken.

Where the spreading score is translated to a score ranging from 100% to 20%. Where 100% represents the spreading score of 1 and 20% the spreading score of 5. Free water indication during spreading giving a negative score of -20% and oil exudation a negative score of 0 to -10% where 0% expresses no oil exudation and -10% significant oil exudation. Resulting in a Stability score range from 0-100%. Where 0% is the worst score and 100% the best.

### Composition

Seven 44.6% fat spreads (44.6% fat by weight on the total formulation) were prepared. First the slurries having the fat composition as in table 1 plus 0.2% lecithin were prepared by the method as described below. Two slurries were prepared according to the invention (examples 1 and 2) and 5 comparatives (A to E).

**Table 1: fat composition examples 1-6, % on end emulsion**

| Nr. | Fat powder | BO, oil phase **(a)** | RP, oil phase **(a)** | PK, oil phase **(a)** | OV, oil phase **(a)** | OV, oil phase **(b)** | SAFA OV (% of total OV) |
|---|---|---|---|---|---|---|---|
| A | 4.5% | 31.6% | | 4.5% | 4% | - | 17.1 |
| 1 | 4.5% | 31.6% | | 4.5% | - | 4% | 17.1 |
| B | 4.5% | 31.6% | | 4.5% | 4% | - | 14.3 |
| C | 4.5% | 15.8% | 15.8 | 4.5% | 4% | - | 17.1 |
| D | 4.5% | - | 31.7 | 4.5% | 4% | - | 17.1 |
| E | 4.5% | 31.6% | | 4.5% | 4% | - | 17.1 |
| 2 | 4.5% | 31.6 | | 4.5% | - | 4% | 17.1 |

### In table 1:

Fat powder erES48 was obtained using a supercritical melt micronisation process similar to the process described in Particle formation of ductile materials using the PGSS technology with supercritical carbon dioxide, P.Münüklü, Ph.D.Thesis, Delft University of Technology, 16-12-2005, Chapter 4, pp. 41-51. The fat powder consisted of an interesterified mixture of 65% dry fractionated palm oil stearin with an Iodine Value of 14 and 35% palm kernel oil (made by the process as set out in WO 2005/071053).

BO is bean oil, RP is rape seed oil, PK is palm kernel oil, and OV is olive oil. Of the olive oils the amount of saturated fatty acids (SAFA) was determined and is given in table 1.

### Preparation of the fat slurry examples A-E

In a mixing vessel the liquid oils including the olive oil were dosed. The mixing vessel was equipped with a high shear mixer and a loop (running from the bottom to the top of the vessel), fitted with a recirculation pump and dynamic mixer. The main body-space of the vacuum vessel was further fitted with an agitator.

The recirculation pump was started, the dynamic mixer operated at 3000 rpm, the high shear mixer at 960 rpm and the agitator at 6 rpm. The lecithin was added to the mixing vessel, while pressure was maintained in the mixing vessel at 0.2 bar. After the dosing of the lecithin the fat powder was added to the oil blend in the mixing vessel and mixed until a homogenous slurry was obtained with well-dispersed fat powder, while pressure was maintained in the mixing vessel at 0.1 bar, after which the vacuum was released to allow pressure to equalize to atmospheric levels.

### Preparation of the fat slurry examples 1 and 2

In a mixing vessel the liquid oils excluding the olive oil were dosed. The mixing vessel was equipped with a high shear mixer and a loop (running from the bottom to the top of the vessel), fitted with a recirculation pump and dynamic mixer. The main body-space of the vacuum vessel was further fitted with an agitator.

The re-circulation pump was started, the dynamic mixer operated at 3000 rpm, the high shear mixer at 960 rpm and the agitator at 6 rpm. The lecithin was added to the mixing vessel, while pressure was maintained in the mixing vessel at 0.2 bar. After the dosing of the lecithin the fat powder was added to the oil blend in the mixing vessel and mixed until a homogenous slurry was obtained with well-dispersed fat powder, while pressure was maintained in the mixing vessel at 0.1 bar, after which the vacuum was released to allow pressure to equalize to atmospheric levels. The olive oil was added to the dispersion in the mixing vessel and mixed for 5 minutes (factory scale)/ 2 minutes (pilot scale) without high shear, while pressure was maintained in the mixing vessel below 0.2 bar. After mixing the vacuum was released to allow pressure to equalize to atmospheric levels.

The processing of the examples on factory scale (2, E) was the same as for the pilot plant scale (1, A-D), except that the scale was different: about 80 kg product for pilot plant scale, and about 2000 kg for factory scale.

### Spread preparation

The slurries so-prepared were processed into spreads of the composition as in table 2, by the process as described below.

**Table 2, Spreads product formulation (wt. %).**

| Ingredient | wt% on total emulsion |
|---|---|
| Fat phase table 1 | 44.6% |
| BOLEC ZT (lecithin) | 0.2 |
| Colourant/flavours | minors |
| Demi-water (incl. acidifier) | balance |
| Salt | 1.65 |

Bolec ZT (Supplier: Unimills B.V., the Netherlands) is lecithin comprising 37 wt. % phosphatidylcholine, 19 wt. % phosphatidylethanolamine and 22 wt. % phosphatidylinositol.

The pH of the water-phase was adjusted to 3.6 using lactic acid.

Salt weight % based on total water-phase.

### Preparation of the water phase

The water phase was prepared by dissolving the sodium chloride in the water and adjusting the pH to about 3.6 using 20 wt. % lactic acid solution.

### Mixing the fat- and water phase

The fat slurries and water phase as prepared above were used to produce the fat continuous spreads. For the pilot plant scale this was done by feeding the fat phase and water phase, after post-dosing minors, to a C-unit (volume 1.5 l) operating at a flow-rate of 100 kg per hour and at 2500 rpm. Tubs were filled and stored at 5 degrees Celsius for a period of up to 1 week. After this storage period, the samples were subjected to cycle tests to test stability.

For the samples on factory scale processing was the same, except that the scale of operation was different

### Results

The droplet size and distribution (d_{3,3} and e-sigma) and the stability of the manufactured spreads were measured:
- after storage at 5°C for one week,
- after having been subjected to a heat-cycle tests: the 'C-cycle', in which spreads were stored for 2 days at 30 degrees Celsius, followed by 4 days at 15 degrees Celsius, followed by 1 day at 10 degrees Celsius before being measured.

**Table 3: analysis of spreads after production and heat-cycle treatment**

| | 5°C / 1 week | 5°C / 1 week | 5°C / 1 week | C-cycle | C-cycle | C-cycle |
|---|---|---|---|---|---|---|
| Nr. | d_{3,3} | e-sigma | stability | d_{3,3} | e-sigma | stability |
| A | no product | no product | no product | no product | no product | no product |
| 1 | 6.03 | 2.31 | 80% | 13.4 | 2.43 | 90% |
| B | 5.35 | 2.26 | 80% | 7.2 | 2.17 | 100% |
| C | 4.4 | 2.18 | 80% | 6.39 | 2.1 | 100% |
| D | 3.74 | 2.12 | 90% | 6.34 | 2.0 | 100% |
| E | no product | no product | no product | no product | no product | no product |
| 2 | 8.28 | 1.95 | 90% | 9.5 | 2.0 | 80% |

## Claims

1. Process for preparing an edible fat slurry comprising fat powder and oil, by mixing 2-30% by weight (on the total slurry) of a fat powder of a structuring fat and 70-98% by weight (on the total slurry) of edible oil, wherein said edible oil is provided as at least two separate oil phases:
(a) 50-99% of an edible oil phase (a) comprising at least 30% soy bean oil, by weight on edible oil phase (a),
(b) 1-50% of an edible oil phase (b) comprising at least 50% (by weight, on total oil phase (b)) of olive oil,
said process comprising the steps of:
- providing the fat powder;
- providing oil phase (a);
- combining the fat powder and oil phase (a) and mixing the fat powder and oil phase (a) in the mixing vessel to a fat slurry for a period of 1 to 30 minutes, during at least part of said mixing the pressure in the vessel is below 0.5 bar;
- providing oil phase (b);
- adding oil phase (b) to the slurry of fat powder and oil phase (a) followed by further mixing for 30 seconds to 10 minutes to provide the final slurry.

2. Process according to claim 1, wherein the total amount of olive oil in the final slurry is between 1-50% by weight, based on the total slurry, more preferably 3-30% by weight, based on the total slurry.

3. Process according to claim 2, wherein the level of saturated fatty acids in oil phase (b) is at least 15% by weight, based on total oil phase (b).

4. Process according to any of the preceding claims, wherein the edible fat slurry comprising fat powder and oil is prepared by mixing 5-25% by weight (on the total slurry) of a fat powder of a structuring fat and 75-95% by weight (on the total slurry) of edible oil.

5. Process according to any of the preceding claims, wherein the amount of edible oil phase (b) mixed with the slurry is 3-30% of the total amount of oil phase.

6. Process according to any of the preceding claims, wherein all of the edible oil phase (b) is olive oil.

7. Process according to any of the preceding claims, wherein the fat powder is a micronised fat powder.

8. Process according to any of the preceding claims, wherein the viscosity of the mixture of oil phase (a) and fat powder, prior to adding oil phase (b) to said mixture, is at least 5 dPa.s, preferably at least 8 dPa.s, more preferably at least 10 dPa.s.

9. Process for making an edible oil-continuous emulsion containing 20-70% (by weight on the total emulsion) of a fat phase and 30-80% (by weight on the total emulsion) of an aqueous phase, which process comprises the steps of:
- providing the aqueous phase at a temperature below 35°C,
- providing a fat slurry of an oil phase and fat powder,
- mixing said aqueous phase and said fat slurry to obtain an oil-continuous emulsion,
wherein said fat slurry is obtained by the process comprising the steps according to any of claims 1 to 8.

10. Process according to claim 9, wherein the emulsion does not contain protein.

11. Process according to claim 9 or 10, wherein the emulsion does not contain a fatty acid monoglyceride emulsifier.

12. Process according to any of claims 9 to 11, wherein the emulsion comprises 0.05%-0.5% of lecithin, based on the total emulsion.

## Patentansprüche

1. Verfahren zum Zubereiten einer essbaren Fettaufschlämmung, die Fettpulver und Öl umfasst, durch Mischen von 2-30 Gew.-% (auf die gesamte Aufschlämmung) eines Fettpulvers eines strukturgebenden Fettes und 70-98 Gew.-% (auf die gesamte Aufschlämmung) von essbarem Öl, wobei das essbare Öl als zumindest zwei getrennte Ölphasen bereitgestellt wird:
(a) 50-99% einer essbaren Ölphase (a), die zumindest 30% Sojabohnenöl, bezogen auf das Gewicht der essbaren Ölphase (a) umfasst,
(b) 1 -50% einer essbaren Ölphase (b), die zumindest 50% (bezogen auf das Gewicht der gesamten Ölphase (b)), Olivenöl umfasst,
wobei das Verfahren die Schritte umfasst von:
- Bereitstellen des Fettpulvers;
- Bereitstellen der Ölphase (a);
- Kombinieren des Fettpulvers und der Ölphase (a) und Mischen des Fettpulvers und der Ölphase (a) in dem Mischgehälter zu einer Fettaufschlämmung über einen Zeitraum von 1 bis 30 Minuten, wobei während zumindest eines Teils des Mischens der Druck in dem Behälter unter 0,5 bar liegt;
- Bereitstellen der Ölphase (b);
- Hinzufügen der Ölphase (b) zu der Aufschlämmung aus Fettpulver und Ölphase (a), gefolgt von einem weiteren Mischen für 30 Sekunden bis 10 Minuten, um die endgültige Aufschlämmung bereitzustellen.

2. Verfahren nach Anspruch 1, wobei die gesamte Menge an Olivenöl in der endgültigen Aufschlämmung zwischen 1-50 Gew.-%, bezogen auf die gesamte Aufschlämmung, bevorzugter 3-30 Gew.-%, bezogen auf die gesamte Aufschlämmung, beträgt.

3. Verfahren nach Anspruch 2, wobei der Gehalt an gesättigten Fettsäuren in der Ölphase (b) zumindest 15 Gew.-%, bezogen auf die gesamte Ölphase (b), beträgt.

4. Verfahren nach einem der vorstehenden Ansprüche, wobei die essbare Fettaufschlämmung, die Fettpulver und Öl umfasst, durch Mischen von 5-25 Gew.-% (auf die gesamte Aufschlämmung) eines Fettpulvers eines strukturgebenden Fettes und 75-95 Gew.-% (auf die gesamte Aufschlämmung) von essbarem Öl zubereitet wird.

5. Verfahren nach einem der vorstehenden Ansprüche, wobei die Menge der essbaren Ölphase (b), die mit der Aufschlämmung gemischt wird, 3-30% der gesamten Menge der Ölphase beträgt.

6. Verfahren nach einem der vorstehenden Ansprüche, wobei die gesamte essbare Ölphase (b) Olivenöl ist.

7. Verfahren nach einem der vorstehenden Ansprüche, wobei das Fettpulver ein mikronisiertes Fettpulver ist.

8. Verfahren nach einem der vorstehenden Ansprüche, wobei die Viskosität der Mischung der Ölphase (a) und des Fettpulvers vor dem Hinzufügen der Ölphase (b) zu der Mischung zumindest 5 dPa·s beträgt, vorzugsweise zumindest 8 dPa·s, bevorzugter zumindest 10 dPa·s beträgt.

9. Verfahren zum Herstellen einer essbaren ölkontinuierlichen Emulsion, die 20-70% (bezogen auf das Gewicht der gesamten Emulsion) einer Fettphase und 30-80% (bezogen auf das Gewicht der gesamten Emulsion) einer wässrigen Phase enthält, wobei das Verfahren die Schritte umfasst von:
- Bereitstellen der wässrigen Phaser bei einer Temperatur unter 35°C,
- Bereitstellen einer Fettaufschlämmung einer Ölphase und Fettpulver,
- Mischen der wässrigen Phase und der Fettaufschlämmung, um eine ölkontinuierliche Emulsion zu erhalten,
wobei die Fettaufschlämmung durch das Verfahren erhalten wird, das die Schritte nach einem der Ansprüche 1 bis 8 umfasst.

10. Verfahren nach Anspruch 9, wobei die Emulsion kein Protein enthält.

11. Verfahren nach Anspruch 9 oder 10, wobei die Emulsion keinen Fettsäuremonoglycerid-Emulgator enthält.

12. Verfahren nach einem der Ansprüche 9 bis 11, wobei die Emulsion 0,05%-0,5% Lecithin, basierend auf der gesamten Emulsion, enthält.

## Revendications

1. Procédé de préparation d'une suspension de graisse comestible comprenant de la poudre de graisse et de l'huile, en mélangeant de 2 à 30% en poids (de la suspension totale) d'une poudre de graisse d'une graisse structurante et de 70 à 98% en poids (de la suspension totale) d'huile comestible, dans lequel ladite huile comestible est fournie en au moins deux phases huileuses distinctes :
(a) 50 à 99% d'une phase huileuse comestible (a) comprenant au moins 30% d'huile de soja, en poids de la phase huileuse comestible (a),
(b) 1 à 50% d'une phase d'huile comestible (b) comprenant au moins 50% (en poids de la phase d'huile totale (b)) d'huile d'olive,
ledit procédé comprenant les étapes consistant à :
- fournir la poudre de graisse ;
- fournir une phase huileuse (a) ;
- combiner la poudre de graisse et la phase huileuse (a) et mélanger la poudre de graisse et la phase huileuse (a) dans le récipient de mélange en une suspension de graisse pendant une durée de 1 à 30 minutes, pendant au moins une partie dudit mélange la pression dans le récipient est inférieur à 0,5 bar ;
- fournir une phase huileuse (b) ;
- ajouter la phase huileuse (b) à la suspension de poudre de graisse et à la phase huileuse (a), puis mélanger de nouveau de 30 secondes à 10 minutes pour obtenir la suspension finale.

2. Procédé selon la revendication 1, dans lequel la quantité totale d'huile d'olive dans la suspension finale est comprise entre 1 et 50% en poids, par rapport au total de la suspension, plus préférablement entre 3 et 30% en poids, par rapport au total de la suspension.

3. Procédé selon la revendication 2, dans lequel la teneur en acides gras saturés dans la phase huileuse (b) est d'au moins 15% en poids, par rapport à la phase huileuse totale (b).

4. Procédé selon l'une quelconque des revendications précédentes, dans lequel la suspension de graisse comestible comprenant de la poudre de graisse et de l'huile est préparée en mélangeant de 5 à 25% en poids (de la suspension totale) d'une poudre de graisse d'une graisse structurante et de 75 à 95% en poids (de la suspension totale) d'huile comestible.

5. Procédé selon l'une quelconque des revendications précédentes, dans lequel la quantité de phase huileuse comestible (b) mélangée à la suspension est de 3 à 30% de la quantité totale de phase huileuse.

6. Procédé selon l'une quelconque des revendications précédentes, dans lequel toute la phase d'huile (b) comestible est de l'huile d'olive.

7. Procédé selon l'une quelconque des revendications précédentes, dans lequel la poudre de graisse est une poudre de graisse micronisée.

8. Procédé selon l'une quelconque des revendications précédentes, dans lequel la viscosité du mélange de phase huileuse (a) et de poudre de graisse, avant d'ajouter la phase huileuse (b) audit mélange, est d'au moins 5 dPa.s, de préférence d'au moins 8 dPa.s, plus préférablement au moins 10 dPa.s.

9. Procédé de fabrication d'une émulsion huile-continue comestible contenant 20 à 70% (en poids de l'émulsion totale) d'une phase grasse et 30 à 80% (en poids de l'émulsion totale) d'une phase aqueuse, ce procédé comprenant les étapes consistant à :
- fournir la phase aqueuse à une température inférieure à 35°C,
- fournir une suspension de graisse d'une phase huileuse et une poudre de graisse,
- mélanger ladite phase aqueuse et ladite suspension de graisse pour obtenir une émulsion huile-continue,
dans lequel ladite suspension de graisse est obtenue par le procédé comprenant les étapes selon l'une quelconque des revendications 1 à 8.

10. Procédé selon la revendication 9, dans lequel l'émulsion ne contient pas de protéine.

11. Procédé selon la revendication 9 ou 10, dans lequel l'émulsion ne contient pas d'émulsifiant de monoglycéride d'acide gras.

12. Procédé selon l'une quelconque des revendications 9 à 11, dans lequel l'émulsion comprend 0,05% à 0,5% de lécithine, sur la base de l'émulsion totale.
